# EUROPEAN PATENT APPLICATION

(11) **EP 1 646 020 A1**
(43) Date of publication of application: **12.04.2006**
(21) Application number: 05253855.0
(22) Date of filing: 21.06.2005
(51) Int. Cl.: G07F 19/00

(54) **Method of operating an image-based self-service terminal and an apparatus therefor**

(30) Priority: 08.10.2004 US 962097
(71) Applicant: NCR International, Inc., Dayton, Ohio 45479 (US)
(72) Inventor: Doran, Wayne M., Kitchener Ontario N2N 1P7 (CA)
(74) Representative: Williamson, Brian

(57) **Abstract**

A method of operating an image-based self-service depositing terminal comprises receiving a financial instrument from a depositor, capturing image data which is representative of an image of the deposited financial instrument, analyzing the captured image data to determine image quality associated with the image of the financial instrument, determining if image quality associated with the image of the financial instrument is suspect, and presenting on a display of the self-service depositing terminal a screen which contains a plurality of selections regarding disposition of the depositing of the financial instrument to allow the depositor to choose one of the selections when the image quality associated with the image of the financial instrument is determined to be suspect. The method may further comprise presenting on a display of the self-service depositing terminal another screen which contains a plurality of selections regarding disposition of the depositing of the financial instrument to allow the depositor to choose one of the selections when the image quality associated with the image of the financial instrument is determined to be suspect. The financial instrument may comprise a check.

## Description

The present invention relates to depositing of financial instruments such as checks, and is particularly directed to a method of operating an image-based self-service terminal, such as an image-based check depositing automated teller machine (ATM), and an apparatus therefor.

A check depositing ATM allows a user to deposit a check (without having to place the check in any deposit envelope) in a public access, unattended environment. To deposit a check, a user inserts a user identification card through a user card slot at the check depositing ATM, enters the amount of the check being deposited, and inserts a check to be deposited through a check slot. A check transport mechanism receives the entered check and transports the check in a forward direction along a check transport path to a number of locations within the ATM to process the check. If the check is not accepted for deposit, the check is returned to the user via the check slot. If the check is accepted for deposit, the amount of the check is deposited into the user's account and the check is transported to and stored in a storage bin within the ATM. An endorser printer prints an endorsement onto the check as the check is being transported to the storage bin.

Checks in the storage bin within the ATM are periodically picked up and physically transported via courier to a back office facility of a financial institution. At the back office facility, the checks are prepared at a document preparation workstation for subsequent processing in an image-based check processing system located at the back office facility. In a first pass of checks through the image-based check processing system, check image data which is representative of images of the checks is captured. Then in a second pass of checks through an image-based check processing system, the checks are encoded and sorted and matched up with their corresponding check image data which was previously captured during the first pass of checks. The second pass of checks may be made through either the same image-based check processing system that the first pass of checks was made or a different image-based check processing system. Checks are processed in the first and second passes through the image-based check processing system(s) for purpose of clearing checks between financial institutions, as is known.

As an alternative to capturing check image data in a first pass of checks through an image-based check processing system located at the back office facility (which requires the checks to be physically transported from the ATM to the back office facility before the first pass of checks can be performed), proposals have been made to remotely capture check image data at the check depositing ATM. After check image data is captured in a "first pass" of checks through the check depositing ATM, the remotely-captured check image data is sent electronically to the back office facility. At a later time, the checks are picked up and physically transported via courier to the back office facility. Then, in a "second pass" of checks through an image-based check processing system located at the back office facility, the checks are matched up with their corresponding check image data which was previously captured at the check depositing ATM. The checks are then further processed as required.

From time to time, a check image represented by check image data which has been captured in a "first pass" through the check depositing ATM may not be of acceptable quality to the financial institution operating the check depositing ATM. When this occurs in some known check depositing ATMs, the deposited check may be returned to the user. In this case, the user may try depositing the check again. However, if the deposited check should happen again to be returned to the user, the user may become frustrated and have a feeling of not knowing what to do next. In some other known check depositing ATMs, the deposited check may be retained by the ATM. The retained check is then picked up at a later time and processed at the back office facility of the financial institution. However, in this case, the user may become quite dissatisfied since the user has now lost the option of immediately taking the check to a branch office and depositing the check (or cashing the check) so as to have immediate access to the funds of the deposited check. It would be desirable to provide a check depositing ATM which can interact with a user so that the user can walk away from the ATM with a more satisfying experience, even if the ATM is unable to process a check which has been deposited by the user.

In accordance with one aspect of the present invention, an image-based self-service depositing terminal comprises a display, means for receiving a check deposited by a depositor, means for capturing check image data which is representative of an image of the deposited check, means for analyzing the check image data to determine image quality associated with the check image, means for determining if image quality associated with the check image is suspect, and control means for presenting on the display a first screen which contains a plurality of selections regarding disposition of the depositing of the check to allow the depositor to choose one of the selections when the image quality associated with the check image is determined to be suspect.

The control means may include means for presenting on the display a second screen which contains a plurality of selections regarding disposition of the depositing of the check to allow the depositor to choose one of the selections when the image quality associated with the check image is determined to be suspect. At least one of the first and second screens may comprise a selection which returns the check to the depositor when the depositor chooses the selection. At least one of the first and second screens may comprise a selection which transports the check to a storage bin for storing checks to be processed at a later time at a financial institution. The first screen may contain a selection which leads to the second screen.

In accordance with another aspect of the present invention, an automated teller machine (ATM) comprises an ATM display, means for receiving a financial instrument deposited by an ATM customer, means for capturing image data which is representative of an image of the deposited financial instrument, means for analyzing the captured image data to determine image quality associated with the image of the financial instrument, means for determining if image quality associated with the image of the financial instrument is suspect, and an ATM controller for presenting on the ATM display a first screen which contains a plurality of selections regarding disposition of the depositing of the financial instrument to allow the ATM customer to choose one of the selections when the image quality associated with the image of the financial instrument is determined to be suspect.

The ATM controller may include means for presenting on the ATM display a second screen which contains a plurality of selections regarding disposition of the depositing of the financial instrument to allow the ATM customer to choose one of the selections when the image quality associated with the image of the financial instrument is determined to be suspect. At least one of the first and second screens may comprise a selection which returns the financial instrument to the ATM customer when the ATM customer chooses the selection. At least one of the first and second screens may comprise a selection which transports the financial instrument to a storage bin for storing financial instruments to be processed at a later time at a financial institution. The first screen may contain a selection which leads to the second screen.

In accordance with yet another aspect of the present invention, a method of operating an image-based self-service depositing terminal comprises receiving a financial instrument from a depositor, capturing image data which is representative of an image of the deposited financial instrument, analyzing the captured image data to determine image quality associated with the image of the financial instrument, determining if image quality associated with the image of the financial instrument is suspect, and presenting on a display of the self-service depositing terminal a screen which contains a plurality of selections regarding disposition of the depositing of the financial instrument to allow the depositor to choose one of the selections when the image quality associated with the image of the financial instrument is determined to be suspect.

The method may further comprise presenting on a display of the self-service depositing terminal another screen which contains a plurality of selections regarding disposition of the depositing of the financial instrument to allow the depositor to choose one of the selections when the image quality associated with the image of the financial instrument is determined to be suspect. The financial instrument may comprise a check.

In accordance with still another aspect of the present invention, an apparatus is provided for use in a self-service terminal which is capable of capturing and image of a financial instrument and providing an indication of the quality of the image of the financial instrument. The apparatus comprises a controller for presenting on a display of the self-service depositing terminal at least one screen which contains a plurality of selections regarding disposition of the depositing of the financial instrument to allow the depositor to choose one of the selections when the image quality associated with the image of the financial instrument is determined to be suspect.

Embodiments of the present invention will now be described, by way of example, with reference to the accompanying drawings, in which:
Fig. 1 is a pictorial diagram of an image-based check depositing ATM embodying the present invention;
Fig. 2 is a simplified schematic sectional diagram, taken approximately along line 2-2 in Fig. 1, and showing a part (the check processing module) of the ATM of Fig. 1;
Fig. 3 is a block diagram of the check processing module of Fig. 2;
Fig. 4 is a flowchart illustrating steps involved in a check depositing operation;
Fig. 5 is a typical screen which may be presented on a display of the check depositing ATM of Fig. 1 during the check depositing operation shown in Fig. 4; and
Fig. 6 is another typical screen which may be presented on a display of the check depositing ATM of Fig. 1 during the check depositing operation shown in Fig. 4.

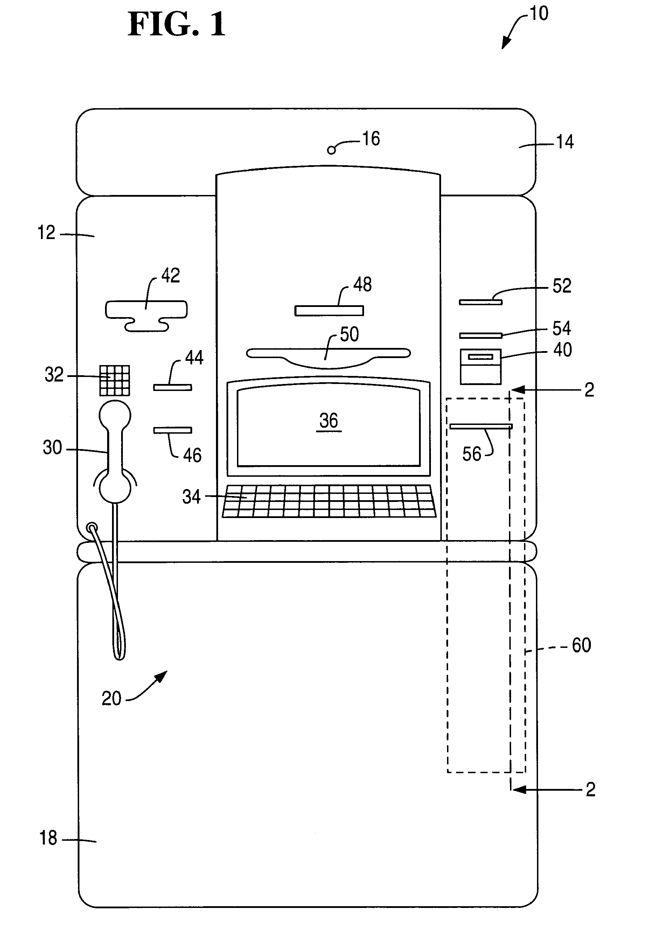

The present invention relates to depositing of financial instruments such as checks, and is particularly directed to a method of operating an image-based self-service depositing terminal, such as an image-based check depositing automated teller machine (ATM), and an apparatus therefor. Referring to Fig. 1, an image-based self-service terminal 10 in the form of an image-based check depositing ATM is illustrated. The check depositing ATM 10 comprises a fascia 12 pivotably coupled to a chassis (not shown); an upper panel 14 mounted to the chassis and defining an aperture 16 through which a camera (not shown) images a user of the ATM 10; and a lower panel 18 hingeably coupled to the chassis so that the lower panel 18 can be opened to reveal a safe (not shown) mounted in the chassis. When the lower panel 18 is open, the fascia 12 can be pivoted upwards to reveal ATM modules mounted within the chassis.

The fascia 12 and lower panel 18 provide a user interface 20 for allowing a user to execute a transaction. The fascia 12 includes a handset 30 and a telephone keypad 32 for allowing a user to contact a remote operator (not shown) typically located in a call centre (not shown). The fascia 12 also includes an encrypting keyboard 34 for allowing a user to enter transaction details, and a display 36 for presenting screens to a user. The fascia 12 also defines eight slots for receiving and dispensing media items, and a tray 40 into which coins can be dispensed. The slots include: a money order printer slot 42, a bunch note input slot 44, a bunch note exit slot 46, a statement output slot 48, a cash dispense slot 50, a card reader slot 52, a card issue slot 54, and a check input/output slot 56. The slots 42 to 56 and tray 40 are arranged so that when the fascia 12 is closed, the slots and tray align with corresponding ATM modules mounted within the ATM's chassis (not shown). The user interface features described above are all provided on an NCR PERSONAS (trade mark) 5878 financial services centre ATM, available from NCR Financial Solutions Group Limited, Discovery Centre, 3 Fulton Road, Dundee, DD2 4SW, Scotland.

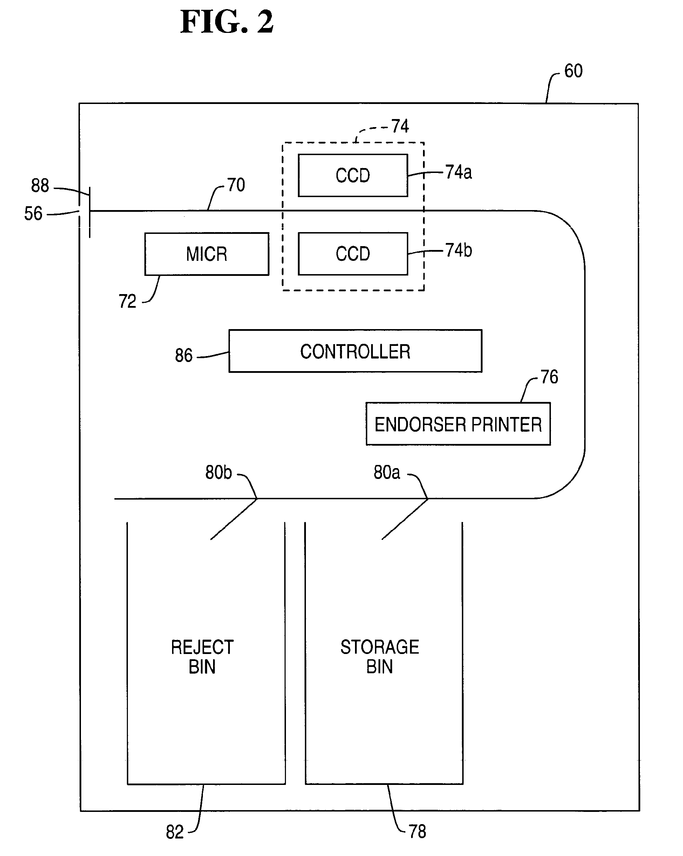

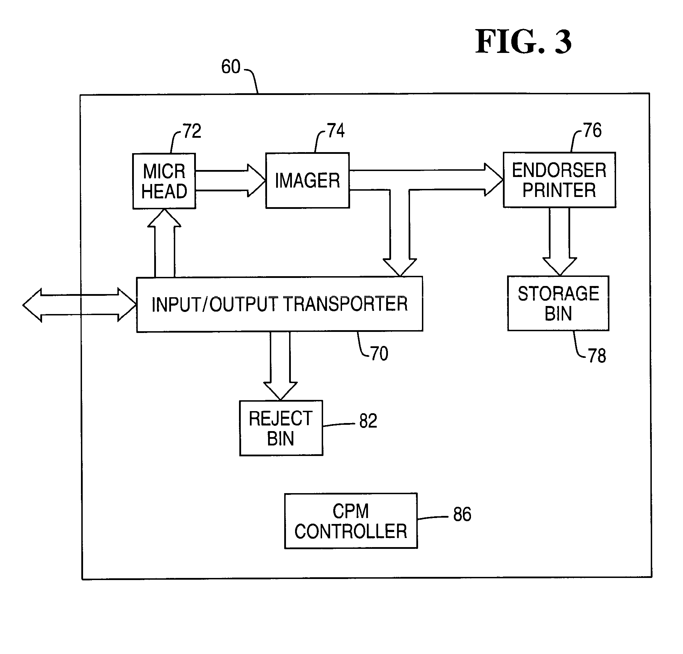

A check processing module (CPM) 60 will now be described with reference to Fig. 2 and Fig. 3. Fig. 2 is a simplified schematic sectional diagram (along line 2-2 in Fig. 1) showing part of the fascia 12 and lower panel 18, and the main parts of the CPM 60. Fig. 3 is a block diagram illustrating the main elements in the CPM 60. The CPM 60 is a modified version of a conventional check processing module, such as the check processing module provided with the PERSONAS (trade mark) 5878 NCR ATM.

The CPM 60 comprises the following elements: a check input/output transport mechanism 70 including an alignment mechanism for aligning a check; a magnetic ink recognition character (MICR) head 72 for reading magnetic details on a code line of a check; an imager 74 including an upper 74a and lower 74b CCD camera for capturing an image of each side of a check (front and rear); a printer 76 for endorsing a check; a storage bin 78 for storing processed checks, and a reject bin 82 for storing rejected checks. The transport mechanism 70 includes two divert gates 80a, 80b for diverting checks to either the storage bin 78 or the reject bin 82. The elements are conventional and will not be described in detail herein. The CPM 60 also includes a controller 86 for controlling the operation of the elements within the CPM 60. The CPM 60 also includes an entrance shutter 88 for opening and closing the check input/output slot 56.

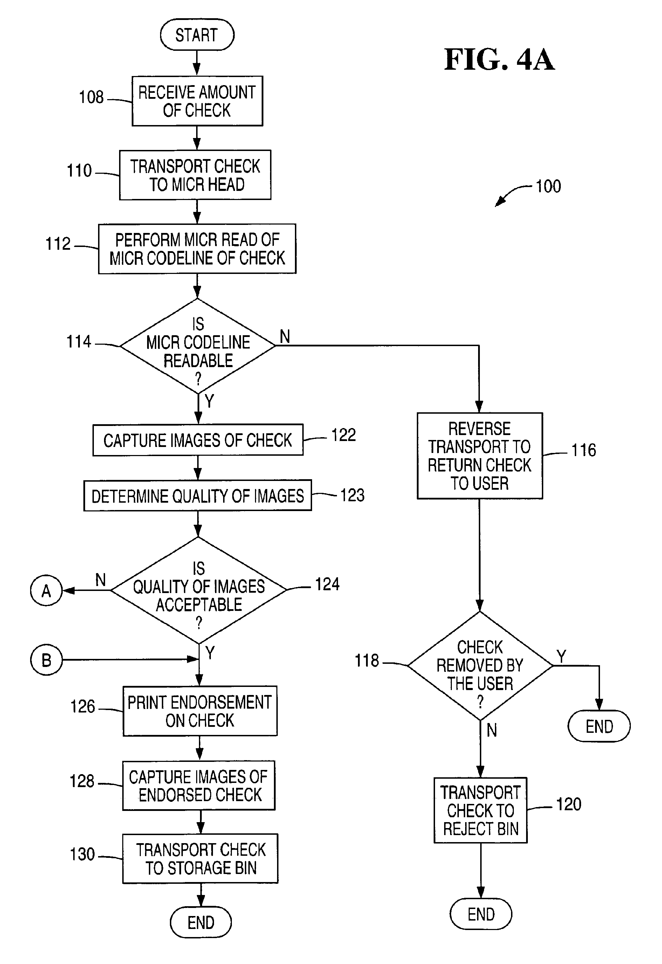

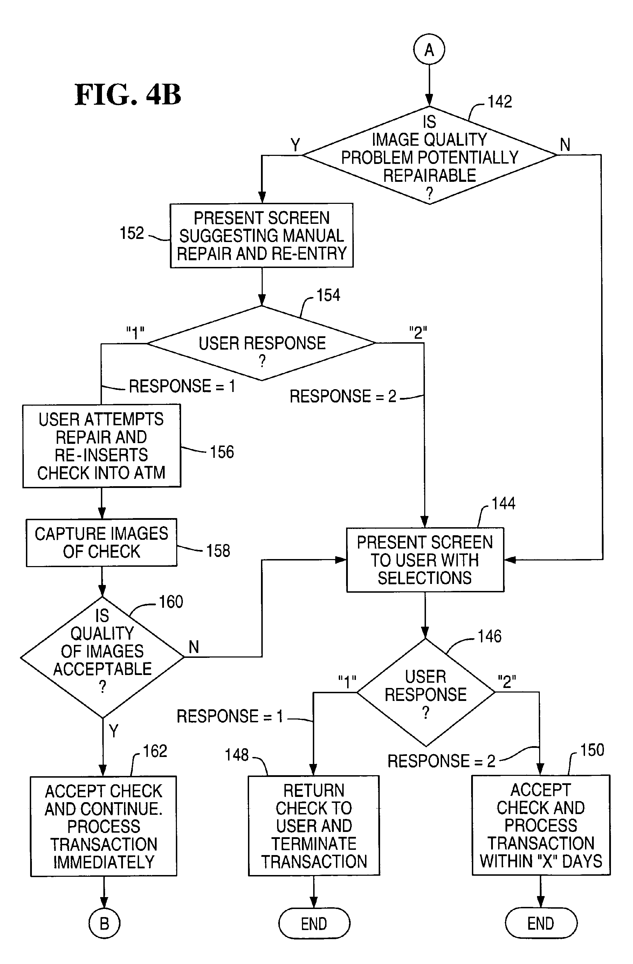

A typical depositing transaction will now be described with reference to Fig. 4 which is a flowchart 100 illustrating the steps involved in a check depositing transaction, and also with reference to Figs. 1 to 3. In this transaction, the user enters user identification card into the card reader slot 52, selects "check depositing" from a list of transaction options presented on the display 36, enters the amount of the check via the keyboard 34, and inserts the check to be deposited through the check input/output slot 56. The controller 86 receives the amount of the check (step 108), and opens the slot shutter 88. The transport mechanism 70 receives the check and transports the received check (step 110) to the MICR head 72 where the MICR codeline on the check is read (step 112).

A determination is made (step 114) as to whether the MICR codeline can be read from the check. If the MICR codeline data from the check is unreadable as determined in step 114, then a check return operation is initiated. When this occurs, the transport mechanism 70 reverses the direction of transport (step 116) to convey the check to the check input/output slot 56 to return the check to the user via the check input/output slot. The controller 86 may monitor the slot 56 to ensure that the check has been removed by the user (step 118). If the user has not removed the check within a predetermined time period, the check is retracted and conveyed to the reject bin 82 (step 120). However, if the MICR codeline data from the check is readable as determined in step 114, then the transport mechanism 70 transports the check to the imager 74, where both sides of the check are imaged (step 122). The quality of the captured check images are determined (step 123). Techniques and methods of determining quality of document images, such as check images, are known. The specific way of determining quality of the captured check images is not important to the present invention.

A determination is then made (step 124) as to whether each of the check images captured in step 122 is of acceptable quality. If the quality of each check image is determined to be acceptable in step 124, then the printer 76 prints endorsement data onto the check (step 126). The check is then transported to the imager 74 to image the endorsed check (step 128) before it is transported to the storage bin 78 (step 130) for subsequent collection and further processing. Although the above describes both steps 122 and 128 being performed, it is conceivable that only one of these steps be performed. Preferably, step 122 is performed, and step 128 is optionally performed.

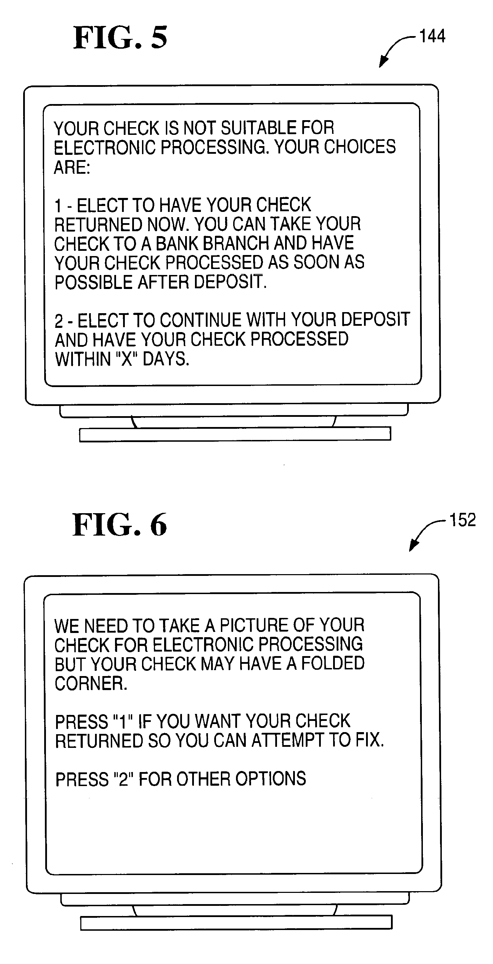

However, if the quality of at least one of the check images is determined to be unacceptable in step 124, a determination is made (step 142) as to whether the image quality problem is potentially repairable. If the image quality problem is not potentially repairable as determined in step 142, a screen which contains user choices is displayed (step 144) on the display 36 to allow the user to choose from a number of different selections as to how the user would like to continue with the transaction. As an example, the user is presented a screen, as shown in Fig. 5, which contains two choices (step 146). More specifically, the screen of Fig. 5 provides the user with the choice of selecting either a "1" or a "2". If the user chooses "1" in step 146, then the check is returned to the user in the same manner as described hereinabove with reference to step 116 to allow the user to take the check to a bank branch to have it processed (step 148). This allows the user to potentially obtain more immediate access to deposited funds of the check. However, if the user chooses "2" in step 146, then the check is accepted and transported to the storage bin 78 for subsequent processing within "X" number of days (step 150). Typically, the check is processed at a bank branch within about five working days or so. The actual number of working days depends upon the schedule of the courier pickup.

If the image quality problem is potentially repairable as determined in step 142, a screen which contains user choices is displayed (step 152) on the display 36 to allow the user to choose from a number of different selections as to how the user would like to continue with the transaction. As an example, the user is presented a screen, as shown in Fig. 6, which contains two choices (step 154). More specifically, the screen of Fig. 6 provides the user with the choice of selecting either a "1" or a "2".

If the user chooses "1" in step 154, then the check is returned to the user in the manner as described hereinabove with reference to step 116 to provide an opportunity for the user to "repair" the check and re-insert the repaired check back into the check input/output slot 56 (step 156). The transport mechanism 70 again transports the check to the imager 74, where both sides of the check are imaged (step 158). A determination is then made (step 160) as to whether each check image captured in step 158 is of acceptable quality. If the quality of each check image is determined to be acceptable in step 160, then the check is accepted (step 162) and processed in steps 126, 128, and 130 as previously described hereinabove.

However, if the quality of at least one of the check images is determined to be unacceptable in step 160, the screen of Fig. 5 which has been described hereinabove with reference to step 144 is displayed on the display 36 to allow the user to choose from the two selections as to how the user would like to continue with the transaction. Also, if the user chooses "2" in step 154, the screen of Fig. 5 is displayed on the display 36 to allow the user to choose from the two selections as to how the user would like to continue with the transaction.

It should be apparent that the ATM customer can interact with the ATM 10 when there is an image quality problem associated with a check image which has been captured at the ATM. Techniques and methods of determining if there is an image quality problem associated with an image of a check are known. The specific way of determining if there is an image quality problem associated with an image of a check is not important to the present invention. By enabling the ATM customer to interact with the ATM 10 in a manner as described hereinabove, the ATM customer is more likely to feel in control of the situation, and is more likely to have a more satisfying experience when making the check deposit.

The screens shown in Figs. 5 and 6 are exemplary only. It is contemplated that other types of screens, and screens with more than two choices on each screen are possible. Although the above-description describes a financial instrument in the form of a check being deposited, it is contemplated other types of financial instruments may be deposited. Also, although the above-description describes a check being deposited in its entire amount by an ATM customer (i.e., the user), it is contemplated that the check may be deposited only in partial amount of the entire amount of the check at the ATM 10, with the remaining amount of the check being cashed and delivered to the ATM customer. Accordingly, it is contemplated that check image data may be captured at any type of self-service terminal, such as a check depositing ATM, a check depositing/cashing ATM, a check cashing ATM, or the like, which has check-imaging capability.

From the above description of the invention, those skilled in the art to which the present invention relates will perceive improvements, changes and modifications. Numerous substitutions and modifications can be undertaken without departing from the scope of the invention.

## Claims

1. An image-based self-service depositing terminal comprising: a display; means for receiving a check deposited by a depositor; means for capturing check image data which is representative of an image of the deposited check; means for analyzing the check image data to determine image quality associated with the check image; means for determining if image quality associated with the check image is suspect; and control means for presenting on the display a first screen which contains a plurality of selections regarding disposition of the depositing of the check to allow the depositor to choose one of the selections when the image quality associated with the check image is determined to be suspect.

2. An image-based self-service depositing terminal according to claim 1, wherein the control means includes means for presenting on the display a second screen which contains a plurality of selections regarding disposition of the depositing of the check to allow the depositor to choose one of the selections when the image quality associated with the check image is determined to be suspect.

3. An image-based self-service depositing terminal according to claim 2, wherein at least one of the first and second screens comprises a selection which returns the check to the depositor when the depositor chooses the selection.

4. An image-based self-service depositing terminal according to claim 2, wherein at least one of the first and second screens comprises a selection which transports the check to a storage bin for storing checks to be processed at a later time at a financial institution.

5. An image-based self-service depositing terminal according to claim 2, wherein the first screen contains a selection which leads to the second screen.

6. An image-based self-service depositing terminal according to any preceding claim, in the form of an automated teller machine (ATM).

7. A method of operating an image-based self-service depositing terminal, the method comprising: receiving a financial instrument from a depositor; capturing image data which is representative of an image of the deposited financial instrument; analyzing the captured image data to determine image quality associated with the image of the financial instrument; determining if image quality associated with the image of the financial instrument is suspect; and presenting on a display of the self-service depositing terminal a screen which contains a plurality of selections regarding disposition of the depositing of the financial instrument to allow the depositor to choose one of the selections when the image quality associated with the image of the financial instrument is determined to be suspect.

8. A method according to claim 7, further comprising: presenting on a display of the self-service depositing terminal another screen which contains a plurality of selections regarding disposition of the depositing of the financial instrument to allow the depositor to choose one of the selections when the image quality associated with the image of the financial instrument is determined to be suspect.

9. A method according to claim 7, wherein the financial instrument comprises a check.
